# EUROPEAN PATENT SPECIFICATION

(11) **EP 3 548 955 B1**
(45) Date of publication and mention of the grant of the patent: **23.11.2022**
(21) Application number: 17811346.0
(22) Date of filing: 27.11.2017
(51) Int. Cl.: G02B 27/01

(54) **DISPLAY APPARATUS AND METHOD OF DISPLAYING USING IMAGE RENDERERS AND OPTICAL COMBINERS**
ANZEIGEVORRICHTUNG UND VERFAHREN ZUR ANZEIGE ANHAND VON BILDRENDERERN UND OPTISCHEN KOMBINIERERN
APPAREIL D'AFFICHAGE ET PROCÉDÉ D'AFFICHAGE FAISANT APPEL À DES DISPOSITIFS DE RESTITUTION D'IMAGE ET À DES COMBINATEURS OPTIQUES

(30) Priority: 01.12.2016 US 201615366424; 27.06.2017 US 201715633868
(43) Date of publication of application: 09.10.2019
(73) Proprietor: Varjo Technologies Oy, 00100 Helsinki (FI)
(72) Inventor: KONTTORI, Urho, 00260 Helsinki (FI); MELAKARI, Klaus, 90140 Oulu (FI); SAHLSTEN,Oiva, 24280 Salo (FI); DUGINOVA, Kseniia, St. Petersburg (RU)
(74) Representative: Aaltonen, Janne Lari Antero
(86) International application number: PCT/FI2017/050825
(87) International publication number: WO 2018/100237

(56) References cited:
- US-A1- 2011 075 257
- US-A1- 2016 240 013
- US-A1- 2016 267 713

## Description

### TECHNICAL FIELD

The present disclosure relates generally to representation of visual information; and more specifically, to display apparatuses comprising image renderers and optical combiners. Furthermore, the present disclosure also relates to methods of displaying, via the aforementioned display apparatuses.

### BACKGROUND

In current times, the use of technologies such as virtual reality and augmented reality has rapidly increased in applications like gaming, education, healthcare, and so forth. This in turn, has increased exposure of people to such technologies. Typically, such technologies present a simulated environment, often known as 'virtual reality' to a user. Generally, the user uses a device or an apparatus, such as a virtual reality device or an augmented reality device, for experiencing such simulated environment. Usually, these devices are located close to the eyes, and are known, for example, as near-eye displays (NED) or head mounted displays (HMD). Commonly, such devices either have one or two small displays, lenses and other optical elements therein. The displays and optics are typically embedded in a helmet, glasses, or a visor, and the user wears the device on their head in order to have a simulated environment presented thereto. Moreover, the devices provide the user with a feeling of immersion in the simulated environment, using contemporary techniques such as stereoscopy.

However, conventional devices have certain drawbacks, for example, viewing comfort for a user. Ordinarily, a visual scene of the simulated environment is rendered at a fixed optical distance. Such rendering forces the user's brain to unnaturally adapt to conflicting focus cues, such as focus cues associated with physical distance of the display from the user's eyes and focus cues associated with the fixed optical distance of the visual scene within the simulated environment. Furthermore, viewing such visual scene rendered at the fixed optical distance may contribute to occurrence of vergence-accommodation conflict for eyes of the user. Additionally, such rendering reduces a feeling of immersion for the user within the simulated environment and may also lead to visual fatigue for the user. Such visual fatigue for some users can even cause serious side-effects long after cessation of using the device.

Therefore, in light of the foregoing discussion, there exists a need to overcome the aforementioned drawbacks associated with rendering of a visual scene in a simulated environment of the conventional virtual and augmented reality devices.

### SUMMARY

The present disclosure seeks to provide a display apparatus.

The present disclosure also seeks to provide method of displaying, via a display apparatus.

The present disclosure seeks to provide a solution to the existing problem of rendering a visual scene at fixed optical distance within a simulated environment. An aim of the present disclosure is to provide a solution that overcomes at least partially the problems encountered in the prior art, and provides a robust and easy to implement display apparatus that overcomes aforementioned drawbacks associated with rendering of visual scenes at fixed optical distance.

In one aspect, an embodiment of the present disclosure provides a display apparatus according to claim 1.

In another aspect, an embodiment of the present disclosure provides a method of displaying, via a display apparatus comprising at least one context image renderer, at least one focus image renderer and at least one optical combiner, according to claim 7.

Embodiments of the present disclosure substantially eliminate or at least partially address the aforementioned problems in the prior art, and enable accurate and efficient rendering a visual scene.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIGs. 1-2 illustrate block diagrams of architectures of a display apparatus, in accordance with different embodiments of the present disclosure;
FIGs. 3A-3B are schematic illustrations of an exemplary operation of a display apparatus with respect to a user's eye, in accordance with an embodiment of the present disclosure;
FIG. 4 illustrates an exemplary representation of a context image and a focus image to be rendered and projected via a display apparatus, in accordance with an embodiment of the present disclosure;
FIGs. 5A-5K illustrate exemplary implementations of a display apparatus, in accordance with various embodiments of the present disclosure; and
FIG. 6 illustrates steps of a method of displaying via the display apparatus, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a display apparatus according to claim 1.

In another aspect, an embodiment of the present disclosure provides a method of displaying, via a display apparatus comprising at least one context image renderer, at least one focus image renderer and at least one optical combiner, according to claim 7.

The aforementioned display apparatus and the method of displaying via the display apparatus enable creation of a visual scene in the manner that at least two different optical distances are provided therein. Such creation of visual scene enables increased feeling of immersion within the simulated environment for the user of the display apparatus, thereby providing an improved user experience therefor. Furthermore, such creation of the visual scene enables to provide accurate focus cues to the user. Such focus cues further increase the feeling of immersion for the user and substantially reduces problems associated with rendering of fixed optical distances, such as those associated with vergence-accommodation conflict. It will be appreciated that such reduction of vergence-accommodation conflict allows reduction of visual fatigue and discomfort experienced by the user. Moreover, such reduction of visual fatigue and discomfort allows for improved user experience and consequently, prolonged use of the display apparatus.

Throughout the present disclosure, the term *"display apparatus"* relates to specialized equipment that is configured to present the visual scene to the user, when the user uses the display apparatus (for example, by way of wearing the display apparatus on his/her head). In such an instance, the display apparatus is operable to act as a device (for example, such as a virtual reality headset, a pair of virtual reality glasses, an augmented reality headset, a pair of augmented reality glasses and so forth) for presenting the visual scene to the user.

It will be appreciated that the visual scene is depicted (namely, represented) by way of a stereoscopic image that is created upon optical combination of the projection of the rendered context image with the projection of the rendered focus image. In an embodiment, the visual scene pertains to a fully-virtual simulated environment. In another embodiment, the visual scene pertains to at least one virtual object overlaid on a real-world environment.

It will be appreciated that the term *"context image"* used herein relates to a wide image of the visual scene, to be rendered and projected via the display apparatus. Furthermore, the term *"focus image"* relates to another image depicting a part (namely, a portion) of the visual scene, to be rendered and projected via the display apparatus. Therefore, it is to be understood that the focus image is dimensionally smaller than the context image. The context and focus images collectively constitute the visual scene upon optical combination thereof. Furthermore, it is to be understood that the rendered focus image is typically projected on and around the fovea of the user's eyes, whereas the rendered context image is projected on the retina of the user's eyes, of which the fovea is just a small part. Moreover, the rendered context and focus images collectively constitute a stereoscopic image of the visual scene to be presented to the user of the display apparatus.

In some implementations, the angular width of the projection of the rendered context image may be, for example, 40, 50, 60, 70, 80, 90, 100, 110, 120, 130, 140, 150, 160, 170, 180, 190, 200, 210 or 220 degrees, whereas the angular width of the projection of the rendered focus image may be, for example, 5, 10, 15, 20, 25, 30, 35, 40, 45, 50, 55 or 60 degrees. In other implementations, the angular width of the projection of the rendered context image is greater than 220 degrees.

It will be appreciated that the aforementioned angular widths of the projections of the context and focus images accommodate saccades and microsaccades, respectively, which are associated with the movement of the user's eyes.

Throughout the present disclosure, the term *"angular width"* refers to an angular width of a given projection as seen from the user's eyes, when the display apparatus is worn by the user. It will be appreciated that optionally, the angular width of the projection of the rendered context image is greater than the angular width of the projection of the rendered focus image since the rendered focus image is typically projected on and around the fovea of the user's eyes, whereas the rendered context image is projected upon the retina of the user's eyes.

Throughout the present disclosure, the term *"context image renderer"* used herein relates to equipment configured to facilitate rendering of the context image. Similarly, the term *"focus image renderer"* used herein relates to equipment configured to facilitate rendering of the focus image.

Optionally, the at least one context image renderer and/or the at least one focus image renderer are implemented by way of at least one projector and a projection screen associated therewith. Optionally, a single projection screen may be shared between separate projectors employed to implement the at least one context image renderer and the at least one focus image renderer. Optionally, the at least one projector is selected from the group consisting of: a Liquid Crystal Display (LCD)-based projector, a Light Emitting Diode (LED)-based projector, an Organic LED (OLED)-based projector, a Liquid Crystal on Silicon (LCoS)-based projector, a Digital Light Processing (DLP)-based projector, and a laser projector.

Optionally, the at least one context image renderer and/or the at least one focus image renderer is implemented by way of at least one display. Optionally, in this regard, the at least one context image renderer is implemented by way of at least one context display configured to emit the projection of the rendered context image therefrom, and the at least one focus image renderer is implemented by way of at least one focus display configured to emit the projection of the rendered focus image therefrom. In such a case, the term *"context display"* used herein relates to a display (or screen) configured to facilitate rendering of the context image thereon. Similarly, the term *"focus display"* used herein relates to a display (or screen) configured to facilitate rendering of the focus image thereon. Optionally, the at least one context display and/or the at least one focus display are selected from the group consisting of: a Liquid Crystal Display (LCD), a Light Emitting Diode (LED)-based display, an Organic LED (OLED)-based display, a micro OLED-based display, and a Liquid Crystal on Silicon (LCoS)-based display.

Furthermore, optionally, dimensions of the at least one context display are larger as compared to dimensions of the at least one focus display. Specifically, the at least one focus display may be much smaller in size than the at least one context display. Therefore, it will be appreciated that the at least one focus display may be moved easily as compared to the at least one context display.

Optionally, the at least one context image renderer is statically positioned and the at least one focus image renderer is movable for a desired projection of the rendered context and focus images. In such a case, the at least one focus image renderer may be moved to adjust a position of the projection of the rendered focus image. Alternatively, optionally, the at least one context image renderer and the at least one focus image renderer are exchanged positionally. In such an instance, the at least one context image renderer is movable and the at least one focus image renderer is statically positioned. Yet alternatively, optionally, both the at least one context image renderer and the at least one focus image renderer are movable.

Throughout the present disclosure, the term *"optical combiner"* used herein relates to equipment (for example, such as optical elements) for optically combining the projection of the rendered context image and the projection of the rendered focus image to constitute the projection of the input image. Beneficially, the at least one optical combiner could be configured to simulate active foveation of a human visual system.

The visual scene is to be created in the manner that at least two different optical distances are provided therein. Throughout the present disclosure, the term *"optical distance"* used herein refers to a virtual distance between a region shown within the stereoscopic image of the visual scene and the user, as perceived by the user. It will be appreciated that in a given stereoscopic image (namely, a three-dimensional image), different regions depicting different objects may have different optical depths. In such an instance, an optical distance of a given object relates to a virtual distance (or stereoscopic depth) between the given object and the user, as perceived by the user. In an example, the stereoscopic image of the visual scene may depict a person standing in front of a building, an optical distance of a region (of the image) depicting the person being less than an optical distance of a region (of the image) depicting the building. In such an example, the user may perceive a virtual distance V1 between himself/herself and the person to be less than a virtual distance V2 between himself/herself and the building.

It will be appreciated that the visual scene having the at least two different optical distances provided therein allows for enhancing a feeling of immersion within the visual scene, for the user of the display apparatus.

Optionally, the at least one optical combiner creates the visual scene by combining the projection of the rendered context image and the projection of the rendered focus image at the at least two different optical distances. Optionally, in this regard, the at least one context image renderer and the at least one focus image renderer are arranged in a manner that the projection of the rendered context image and the projection of the rendered focus image rendered thereupon respectively, are combined to provide the at least two different optical distances in the visual scene. As an example, the at least one context image renderer and the at least one focus image renderer may be implemented by way of a context display and a focus display respectively. In such a case, the context display and the focus display may be arranged at different distances from the user's eyes, in a manner that the projection of the rendered context image and the projection of the rendered focus image emanating therefrom, may be optically combined (by the at least one optical combiner) to create the visual scene having the at least two different optical distances therein.

Optionally, the at least one optical combiner is configured to optically combine different regions of the projection of the rendered context image and/or the projection of the rendered focus image are combined to provide the at least two different optical distances in the visual scene. In an example, a first region of the focus image and a second region of the focus image may be optically combined with the context image to provide three different optical distances in the visual scene.

The display apparatus further comprises means for detecting a gaze direction and a processor coupled in communication with the at least one optical combiner and the means for detecting the gaze direction, wherein the processor is configured to:
(a) receive an input image, and use the detected gaze direction to determine a region of visual accuracy of the input image;
(b) process the input image to generate the context image and the focus image, the context image having a first resolution and the focus image having a second resolution, wherein:
   (i) the focus image substantially corresponds to the region of visual accuracy of the input image, and
   (ii) the second resolution is higher than the first resolution; and
(c) render the context image at the at least one context image renderer and the focus image at the at least one focus image renderer substantially simultaneously, whilst controlling the at least one optical combiner to combine the projection of the rendered context image with the projection of the rendered focus image in a manner that the projection of the rendered focus image substantially overlaps a projection of a region of the rendered context image that substantially corresponds to the region of visual accuracy of the input image.

Throughout the present disclosure, the term *"means for detecting a gaze direction"* used herein relates to specialized equipment for detecting a direction of gaze (namely, a gaze direction) of the user. The display apparatus uses the means for detecting the gaze direction for determining the aforesaid gaze direction via invasive or non-invasive techniques. Beneficially, an accurate detection of the gaze direction facilitates the display apparatus to closely implement gaze contingency thereon. Examples of the means for detecting the gaze direction include contact lenses with motion sensors, cameras monitoring position of pupil of the eye, and so forth. Such means for detecting the gaze direction are well known in the art.

As an example, the means for detecting the gaze direction may be employed to detect the gaze direction of the user's eye, for projecting the rendered focus image on and around the fovea of the user's eye and for projecting the rendered context image on a retina of the user's eye, of which the fovea is just a small part. Therefore, even upon a change in the gaze direction (namely, due to a movement of the user's eye), the rendered focus image is projected on and around the fovea and the rendered context image is projected on the retina, for implementing active foveation in the display apparatus.

It is to be understood that the means for detecting the gaze direction may also be referred to as an *"eye-tracker system",* a *"gaze-tracking system",* a *"means for tracking a gaze direction",* or a *"gaze-tracking unit".*

In an embodiment, the processor is implemented by way of hardware, software, firmware or a combination of these, suitable for controlling the operation of the display apparatus. The processor is configured to control the operation of the display apparatus so as to present the visual scene to the user. Additionally, optionally, the processor is configured to adjust the visual scene that is to be presented to the user, in accordance with change in the direction of the user's gaze occurring due to movement of the user's eye.

According to an embodiment, the term *"input image"* relates to a representation of the visual scene of the fully-virtual simulated environment (for example, a virtual reality environment) to be displayed via the display apparatus. According to another embodiment, the term *"input image"* relates to a representation of the visual scene depicting the at least one virtual object overlaid on the real-world environment. Examples of the at least one virtual object include, but are not limited to, a virtual navigation tool, a virtual gadget, a virtual message, a virtual entity, and a virtual media. In such an instance, the at least one virtual object could be overlaid on a real-world image (of the real-world environment) to constitute a visual scene of a resultant simulated environment (for example, an augmented reality environment). Notably, the term *"real world image"* relates to an image depicting actual surroundings of the user whereat he/she is positioned. Optionally, the display apparatus comprises an imaging system to capture the real world image. More optionally, the display apparatus further comprises at least one optical equipment (for example, such as a mirror, a lens, a prism, and the like) to implement aforesaid overlaying operation and to project the resultant simulated environment onto the user' eyes.

According to an embodiment, in the aforesaid step (a), the display apparatus is configured to receive the input image from a memory unit communicably coupled thereto. The memory unit could be configured to store the input image in a suitable format including, but not limited to, Moving Pictures Experts Group (MPEG), Joint Photographic Experts Group (JPEG), Tagged Image File Format (TIFF), Portable Network Graphics (PNG), Graphics Interchange Format (GIF), and Bitmap file format (BMP).

According to another embodiment, in the aforesaid step (a), the display apparatus is configured to receive the input image from an imaging system of the display apparatus. In such an instance, an image sensor of the imaging system is configured to capture the input image. Optionally, the processor is configured to receive additional depth information pertaining to the input image from the imaging system. Examples of the imaging system include, but are not limited to, an RGB-D camera, a Light Detection and Ranging (LiDAR) camera, a Time-of-Flight (ToF) camera, a Sound Navigation and Ranging (SONAR) camera, a laser rangefinder, a stereo camera, an infrared camera, and an ultrasound imaging equipment. As an example, the input image may depict a coffee shop whereat the user is positioned.

According to yet another embodiment, in the step (a), the input image is a computer-generated image. In such an instance, the input image may be generated by the processor of the display apparatus.

Furthermore, it is to be understood that the term *"region of visual accuracy"* used herein relates to a region of the input image whereat the detected gaze direction of the user is directed (namely, focused) when the user of the display apparatus views the input image. Therefore, the region of visual accuracy is a fixation region within the input image. In other words, the region of visual accuracy is a region of interest (or a fixation point) within the input image, and is projected onto the fovea of the user's eyes. Therefore, the region of visual accuracy relates to a region resolved to a much greater detail as compared to other regions of the input image, when the input image is viewed by the human visual system.

Furthermore, optionally, the second resolution (of the focus image) is higher than the first resolution (of the context image) since the rendered focus image is typically projected by the display apparatus on and around the fovea of the user's eyes, whereas the rendered context image is projected by the display apparatus upon the retina of the user's eyes. Such resolution of the focus and context images allow for emulating visual characteristics of the human visual system when the input image is viewed by the user of the display apparatus.

More optionally, the first and second resolutions are to be understood in terms of angular resolution. In other words, pixels per degree indicative of the second resolution are higher than pixels per degree indicative of the first resolution. As an example, the fovea of the eye of the user corresponds to 2 degrees of visual field and receives the projection of the focus image of angular cross section width equal to 114 pixels indicative of 57 pixels per degree. Therefore, an angular pixel size corresponding to the focus image would equal 2/114 or 0.017. Furthermore, in such an example, the retina of the eye corresponds to 180 degrees of visual field and receives the projection of the context image of angular cross section width equal to 2700 pixels indicative of 15 pixels per degree. Therefore, an angular pixel size corresponding to the context image would equal 180/2700 or 0.067. As calculated, the angular pixel size corresponding to the context image is clearly much larger than the angular pixel size corresponding to the focus image. However, a perceived angular resolution indicated by a total number of pixels may be greater for the context image as compared to the focus image since the focus image corresponds to only a part of the context image, wherein the part corresponds to the region of visual accuracy of the image.

It will be appreciated that in the aforesaid step (c), the projection of the rendered context image is combined with the projection of the rendered focus image to provide the at least two different optical distances in the visual scene. It will also be appreciated that the context image and the focus image are rendered substantially simultaneously in order to avoid time lag during combination of projections thereof.

Optionally, the region of the rendered context image that substantially corresponds to the region of visual accuracy of the input image is masked. Optionally, in this regard, the processor is configured to combine the projection of the rendered context image with the projection of the rendered focus image in a manner that the projection of the rendered focus image substantially overlaps the projection of the masked region of the rendered context image. It will be appreciated that the processor optionally masks the region of the context image that substantially corresponds to the region of visual accuracy of the input image in order to avoid optical distortion of the region of visual accuracy of the input image, when the projection of the focus image is combined with the projection of the rendered context image. Notably, such masking may be implemented since the rendered focus image having a high resolution includes more information pertaining to the region of visual accuracy of the input image, as compared to the rendered context image having a low resolution. As an example, pixels of the context image corresponding to the region of visual accuracy of the input image may be dimmed (namely, darkened) for masking.

Furthermore, optionally, the processor is configured to mask the region of the context image corresponding to the region of visual accuracy of the input image in a manner that transitional area seams (or edges) between the region of visual accuracy of the input image and remaining region of the input image are reduced, for example minimized. In such an instance, the masking could be performed as a gradual gradation in order to reduce (for example, to minimize) transitional area seams between the superimposed context and focus images so that the displayed input image appears continuous. For example, the processor may significantly dim pixels of the context image corresponding to the region of visual accuracy of the input image, and gradually reduce an amount of dimming of the pixels with an increase in distance thereof from the region of visual accuracy of the input image. Furthermore, the masking could be performed using linear transparency mask blend of inverse values between the context image and the focus image at the transition area, stealth (or camouflage) patterns containing shapes naturally difficult for detection by the eyes of the user, and so forth.

In an example implementation, the input image may represent a visual scene of a fully-virtual simulated environment, the visual scene depicting a park that is seen through a window. Furthermore, the input image is processed to generate the context and focus images (as described hereinabove). In a first case, when the means for detecting the gaze direction detects that the user's gaze is focused at the window, the region of visual accuracy of the input image corresponds to a region of the window. In such an instance, the focus image depicts the window, and context image depicts the window and the park. Therefore, in such a case, the processor is configured to control the at least one optical combiner in a manner that an optical distance of the focus image is lesser than an optical distance of the context image, when the visual scene is presented to the user. In a second case, when the means for detecting the gaze direction detects that the user's gaze is focused at the park, the region of visual accuracy of the input image corresponds to a region of the park. In such an instance, focus image depicts the park and context image depicts the window and park. Therefore, in such a case, the processor is configured to control the at least one optical combiner in a manner that that the optical distance of the focus image is greater than the optical distance of the context image, when the visual scene is presented to the user. It will be appreciated that in the aforementioned examples, combining the projection of the rendered focus image with the projection of the rendered context image enables to provide different optical distances within the visual scene created on the display apparatus. Furthermore, such the visual scene enables the user to perceive the stereoscopic depth, thereby improving the user's feeling of immersion within the visual scene.

In another example implementation, the input image may represent a visual scene of a simulated augmented reality environment, the visual scene depicting a virtual entity, for example, a boy sitting on real-world grass with his legs outstretched. In such an instance, the user's gaze may be detected to be focused at the legs of the boy. Therefore, the focus image substantially corresponds to the legs of the boy and the context image substantially corresponds to a low-resolution representation of the entire scene. In such a case, the processor is configured to control the at least one optical combiner in a manner that an optical distance X1 of a first region of the focus image depicting toes of the boy is lesser than an optical distance X2 of a second region of the focus image depicting shins, knees and thighs of the boy, and the optical distance X2 is lesser than an optical distance X3 of the context image, when the visual scene is presented to the user. Therefore, it will be appreciated that the display apparatus allows for providing different optical depths for a single object within the stereoscopic visual scene.

The display apparatus further comprises at least one first controllable lens for adjusting an optical distance of the rendered context image. Optionally, in this regard, the at least one first controllable lens is positioned on an optical path of the projection of the rendered context image. Throughout the present disclosure, the term *"controllable lens"* used herein refers to a lens whose focal length can be adjusted. Moreover, the term *"focal length"* used herein refers to a distance between a given controllable lens (or a principal axis of the given controllable lens) and a convergence point of parallel light rays passing through the given controllable lens. It will be appreciated that a higher focal length of the given controllable lens is associated with a provision of a smaller visual field in a given projection of a given image passing therethrough. However, the higher focal length will also be associated with a higher magnification of the given image. In such an instance, the optical distance of the rendered context image is adjusted to focus and/or magnify different regions within the visual scene. For example, in a visual scene comprising a building, the focal length of the at least one first controllable lens may be adjusted to increase (or decrease) an optical distance between the user and the building.

Optionally, the display apparatus comprises at least one first actuator coupled to the at least one first controllable lens, wherein the processor is configured to adjust the optical distance of the rendered context image by applying a first control signal to the at least one first actuator. In such an instance, the at least one first actuator could be a mechanical actuator, an electrical actuator, a hydraulic actuator, and so forth. Therefore, the first control signal could be mechanical force, electrical current, hydraulic pressure, and so forth. As an example, the at least one first controllable lens may be coupled to at least one first mechanical actuator. In such a case, the processor may adjust the focal length of the at least one first controllable lens by applying the first control signal to mechanically actuate the at least one first mechanical actuator.

According to an embodiment, the focal length of the at least one first controllable lens is to be adjusted at a rate that is substantially similar to a refresh rate of the at least one context image renderer. Throughout the present disclosure, the term *"refresh rate"* used herein refers to a number of times a given image renderer updates a given image, within one second. Optionally, the refresh rate of the at least one context image renderer is in a range of 90-1800 Hz.

In an example, the focal length of the at least one first controllable lens may be adjusted at a rate of 210 Hz. In another example, the context image may be rendered using the at least one context image renderer at 3 different optical distances (corresponding to increasing (or decreasing) stereoscopic depths) by way of refreshing the at least one context image renderer at a rate of 70 Hz. Therefore, in such instance, the focal length of the controllable lens may be adjusted at a rate of 70 Hz to correspond to the refresh rate of the at least one context image renderer.

The display apparatus further comprises at least one second controllable lens for adjusting an optical distance of the rendered focus image. Optionally, in this regard, the at least one second controllable lens is positioned on an optical path of the projection of the rendered focus image.

Optionally, the display apparatus comprises at least one second actuator coupled to the at least one second controllable lens, wherein the processor is configured to adjust the optical distance of the rendered focus image by applying a second control signal to the at least one second actuator. In such an instance, the at least one second actuator could be a mechanical actuator, an electrical actuator, a hydraulic actuator, and so forth. Therefore, the second control signal could be mechanical force, electrical current, hydraulic pressure, and so forth.

In one example, the user of the display apparatus shifts their gaze direction from far to near visual field to focus on an object within the rendered focus image. In such an instance, a focal length of the at least one second controllable lens is adjusted to enable the user to focus on the object.

According to one embodiment, a focal length of the at least one second controllable lens is to be adjusted at a rate that is substantially similar to a refresh rate of the at least one focus image renderer. More optionally, the refresh rate of the at least one focus image renderer is in a range of 90-1800 Hz.

It will be appreciated that the aforesaid adjustment of the at least one first controllable lens and/or the at least one second controllable lens, for adjusting the optical distance of the rendered context image and the rendered focus image respectively, allows for provision of depth cues to the user when he/she views the visual scene. Furthermore, such depth cues enable better perception of stereoscopic depth within the visual scene, thereby enhancing the user's immersion within the visual scene. Additionally, such depth cues enable in substantially reducing occurrences of vergence-accommodation conflict that is generally associated with conventional display apparatuses. Moreover, the adjustment of the at least one first controllable lens and/or the at least one second controllable lens with respect to the refresh rates of the context and focus image renderers allows for seamless and efficient adjustment of the optical distances (namely, the stereoscopic depths) within the visual scene.

In one embodiment, the display apparatus further comprises two prisms arranged in proximity to each other and at least one actuator for adjusting a distance between the two prisms, wherein the distance between the two prisms is to be adjusted to switch between the at least two different optical distances. In such an instance, the two prisms are arranged on the optical path of the projection of the rendered context image and/or the optical path of the projection of the rendered focus image. It will be appreciated that since a prism is generally configured to change an optical path of light passing therethrough, the two prisms enable in switching between the at least two different optical distances by changing the optical path of the projection(s) passing therethrough. In other words, due to adjustment of the distance between the two prisms, the projection(s) passing therethrough travel through different distances, thereby, providing the at least two optical distances in the visual scene. Moreover, adjusting the distance between the two prisms enables more optical distances to be provided, for example, when more than two optical distances are required.

Optionally, the processor is configured to control the at least one actuator to adjust the distance between the two prisms.

In one example, the two prisms may be arranged on the optical path of the projection of the rendered context image, between the context image renderer and the user's eyes. In such an example, the at least two different optical distances may correspond to a near visual field and a far visual field of the context image. Therefore, the distance between the two prisms may be adjusted to change the optical path of the projection of the rendered context image, to switch between the near visual field and the far visual field of the context image.

In another example, the two prisms may be arranged on the optical path of the projection of the rendered focus image, between the focus image renderer and the user's eyes. In such an example, the at least two different optical distances may correspond to the first region and the second region of the focus image, wherein the user's gaze may be sharply focused at the first region of the focus image. Therefore, the distance between the two prisms may be adjusted to selectively focus (or defocus) the first and second regions of the focus image based upon the user's gaze. In a first case, a first distance D1 (for example, such as 5 millimetres) between the two prisms may allow for optical distance of the first region to be lesser than optical distance of the second region. In a second case, a second distance D2 (for example, such as 10 millimetres) between the two prisms may allow for the optical distance of the first region to be greater than the optical distance of the second region. In both the first and the second cases, the distance between two prisms may be adjusted in a manner that the first region is well-focused whereas the second region is comparatively defocused.

According to an embodiment, the at least one context image renderer and/or the at least one focus image renderer are implemented by way of the at least one display, the at least one display comprising at least a first set of pixels and a second set of pixels, wherein a first optical distance provided by the first set of pixels is different from a second optical distance provided by the second set of pixels. Optionally, in this regard, the at least one context display and/or the at least one focus display comprise at least the first set of pixels and the second set of pixels. It will be appreciated that the user's eyes are capable of perceiving different optical depths in a given image. Therefore, the first set of pixels and the second set of pixels of a given display allow for provision of different regions of the context image and/or the focus image to have different optical distances within the visual scene. In an example, the first set of pixels comprises pixels that are clustered closer to each other as compared to the second set of pixels. In such an instance, the first set of pixels may be employed to render the first region of the focus image while the second set of pixels may be employed to render the second region of the focus image. Such difference in pixel densities associated with the first set of pixels and the second set of pixels enables to create different optical distances within the visual scene, such as a first optical distance and a second optical distance.

In another example, the focus image renderer and the context image renderer may be implemented by way of a single display. In such a case, the first set of pixels may be employed to render the focus image while the second set of pixels may be employed to render the context image. In other words, the second set of pixels may correspond to defocus blur in the visual scene. It will be appreciated that such defocus blur enables to enhance the user's perception of stereoscopic depth, which further enhances the feeling of immersion within the visual scene. Moreover, the defocus blur beneficially enables to reduce occurrence of vergence-accommodation conflict.

In one embodiment, the at least one display comprises a third set of pixels, wherein a third optical distance provided by the third set of pixels is different from the first and second optical distances. For example, the third optical distance may correspond to an intermediate optical distance that lies between the first and second optical distances.

In one embodiment, the at least one focus image renderer is implemented by way of at least one display comprising an array of pixels, and wherein the display apparatus further comprises at least one array of micro-lenses positioned in front of the array of pixels of the at least one display, the at least one array of micro-lenses being arranged to magnify at least one region of the focus image rendered by their corresponding pixels of the array of pixels in a manner that a desired optical distance is provided for the at least one region of the focus image. In an example, the at least one display comprises an array of micro-displays. In such an instance, the micro-displays are operable to render different perspectives (or views) of an object as different regions of the focus image. For example, the different perspectives of the object may correspond to a light field associated with the visual scene. Moreover, each region comprises an array of pixels. In one example, the different regions corresponding to different optical distances of the focus image are magnified by the array of micro-lenses. Thereafter, projections of the magnified regions are combined by the optical combiner. Furthermore, such combination of the magnified regions enables creation of the visual scene having the at least two different optical distances therein.

According to one embodiment, the at least one context image renderer is implemented by way of at least one display comprising an array of pixels, and wherein the display apparatus further comprises at least one array of micro-lenses positioned on an optical path from the at least one display, the at least one array of micro-lenses being arranged to magnify at least one region of the context image rendered by their corresponding pixels of the array of pixels in a manner that a desired optical distance is provided for the at least one region of the context image. In an example, the at least one display comprises an array of micro-displays. For example, the visual scene may depict a specular reflection of a window on an object's surface. In such an instance, a light field associated with the window is rendered on the at least one display associated with the at least one context image renderer at a first optical distance. Furthermore, a light field associated with the object is rendered on the at least one display associated with the at least one focus image renderer at a second optical distance. Moreover, a light field associated with the specular reflection on the object's surface is rendered on the at least one display associated with the at least one focus image renderer at a third optical distance. In such a case, the projections of images associated with the window, the object, the specular reflection are combined by the optical combiner. Such rendering of the light fields associated with the window, the object and the specular reflection at different optical distances enables the user to focus on any desired optical distance, such as, the desired optical distance associated with the window, the object or the specular reflection on the object's surface.

### Image processing:

Optionally, the processor is configured to implement image processing functions for at least one of: the at least one context image renderer, the at least one focus image renderer. In such an instance, the image processing functions are implemented prior to rendering the context image and the focus image, via the at least one context image renderer and the at least one focus image renderer, respectively. Beneficially, the implementation of such image processing functions allows for optimizing quality of the rendered context and focus images. Furthermore, the image processing functions are selected by taking into account properties of at least one of: the at least one context image renderer, the at least one focus image renderer, the input image to be displayed via the display apparatus.

Optionally, the image processing functions for the at least one context image renderer comprise at least one function for optimizing perceived context image quality, the at least one function selected from the group comprising low pass filtering, colour processing, gamma correction, and edge processing to minimize perceived distortion on a boundary of combined projections of the rendered context and focus images.

Furthermore, optionally, the image processing functions for the at least one focus image renderer comprise at least one function for optimizing perceived focus image quality, the at least one function selected from the group comprising image cropping, image sharpening, colour processing, gamma correction, and edge processing to reduce, for example to minimize, perceived distortion on the boundary of combined projections of the rendered context and focus images.

### Optical combiner:

Optionally, the at least one optical combiner comprises at least one first optical element that is arranged for any of: allowing the projection of the rendered context image to pass through substantially, whilst reflecting the projection of the rendered focus image substantially; or allowing the projection of the rendered focus image to pass through substantially, whilst reflecting the projection of the rendered context image substantially. The at least one first optical element is arranged to combine optical paths of the projections of the rendered context and focus images. Beneficially, such an arrangement of the at least one first optical element facilitates projection of the rendered focus image on and around the fovea of the eye, and facilitates projection of the rendered context image on the retina of the eye, of which the fovea is just a small part.

Optionally, the at least one first optical element of the at least one optical combiner is implemented by way of at least one of: a semi-transparent mirror, a semi-transparent film, a prism, a polarizer, an optical waveguide. As an example, the at least one first optical element of the at least one optical combiner may be implemented as an optical waveguide. In such a case, the optical waveguide may be arranged to allow the projection of the rendered focus image to pass towards a field of vision of the eyes of the user by reflection therefrom, and the optical waveguide may be transparent such that the context image is visible therethrough. Therefore, the optical waveguide may be semi-transparent. Alternatively, the optical waveguide may be arranged to allow the projection of the rendered context image to pass towards the field of vision of the eyes of the user by reflection therefrom and the optical waveguide may be transparent such that the focus image is visible therethrough. Optionally, the optical waveguide further comprises optical elements therein (for example, such as microprisms, mirrors, diffractive optics, and so forth). Optionally, the optical waveguide is tiltable and/or movable. More optionally, the optical waveguide is electro-optically turnable, so as to accommodate for the at least two different optical distances in the visual scene.

Optionally, the at least one optical combiner comprises at least one third actuator for moving the at least one focus image renderer with respect to the at least one first optical element of the at least one optical combiner, wherein the processor of the display apparatus is configured to control the at least one third actuator to adjust a location of the projection of the rendered focus image on the at least one first optical element. In such an instance, the at least one third actuator is used to move the at least one focus image renderer when the gaze direction of the eye shifts from one direction to another. Upon such a shift in the gaze direction of the eye, the arrangement of the at least one optical combiner and the at least one focus image renderer may not project the rendered focus image on and around the fovea of the eye. Therefore, the processor of the display apparatus is configured to control the at least one third actuator to move the at least one focus image renderer with respect to the at least one first optical element, to adjust the location of the projection of the rendered focus image on the at least one first optical element such that the rendered focus image is projected on and around the fovea of the eye even upon occurrence of such a shift in the gaze direction. Optionally, the processor of the display apparatus is configured to control the at least one third actuator by generating an actuation signal (for example, such as an electric current, hydraulic pressure, and so forth).

In an example, the at least one third actuator may move the at least one focus image renderer closer or away from the at least one first optical element. In another example, the at least one third actuator may move the at least one focus image renderer laterally with respect to the at least one first optical element. In yet another example, the at least one third actuator may tilt and/or rotate the at least one focus image renderer with respect to the at least one first optical element.

Furthermore, optionally, the at least one optical combiner comprises at least one second optical element that is positioned on an optical path between the at least one first optical element and the at least one focus image renderer, and at least one fourth actuator for moving the at least one second optical element with respect to the at least one first optical element. Optionally, the at least one second optical element is selected from the group consisting of a lens, a prism, a mirror, and a beam splitter. Furthermore, in such an instance, the processor of the display apparatus is configured to control the at least one fourth actuator to adjust the location of the projection of the rendered focus image on the at least one first optical element. Consequently, actuation of the second optical element changes the optical path of the projection of the rendered focus image, thereby facilitating projection of the rendered focus image on and around the fovea of the eye even upon occurrence of a shift in the gaze direction. Optionally, the processor of the display apparatus is configured to control the at least one fourth actuator by generating an actuation signal (for example, such as an electric current, hydraulic pressure, and so forth).

For example, the at least one second optical element may be implemented by way of two prisms that are positioned on an optical path between a semi-transparent mirror (namely, the at least one second optical element) and the at least one focus image renderer. In such an example, the optical path of the projection of the rendered focus image may change upon passing through the two prisms to adjust the location of the projection of the rendered focus image on the semi-transparent mirror. Furthermore, the two prisms may be moved transversally and/or laterally, be rotated, be tilted, and so forth, by the at least one second actuator.

Optionally, the at least one optical combiner comprises at least one fifth actuator for moving the at least one first optical element, wherein the processor of the display apparatus is configured to control the at least one fifth actuator to adjust the location of the projection of the rendered focus image on the at least one first optical element. In such an instance, the at least one fifth actuator is used to move the at least one first optical element in order to facilitate projection of the rendered focus image on and around the fovea of the eye even upon occurrence of a shift in the gaze direction. Optionally, the processor of the display apparatus is configured to control the at least one fifth actuator by generating an actuation signal (for example, such as an electric current, hydraulic pressure, and so forth).

In an example, the at least one fifth actuator may move the at least one first optical element closer or away from the at least one focus image renderer. In another example, the at least one fifth actuator may move the at least one first optical element laterally with respect to the at least one focus image renderer. In yet another example, the at least one fifth actuator may tilt and/or rotate the at least one first optical element.

### Focusing lens:

Moreover, optionally, the display apparatus comprises at least one focusing lens that is positioned on the optical path between the at least one first optical element and the at least one focus image renderer, and at least one sixth actuator for moving the at least one focusing lens with respect to the at least one focus image renderer. In such an instance, the processor of the display apparatus is configured to control the at least one sixth actuator to adjust a focus of the projection of the rendered focus image. Furthermore, optionally, the at least one focusing lens utilizes specialized properties thereof to adjust a focus of the projection of the rendered focus image by changing the optical path thereof. Beneficially, the focus of the projection of the rendered focus image can be adjusted to accommodate for diopter tuning, astigmatism correction, and so forth. Optionally, the processor of the display apparatus is configured to control the at least one sixth actuator by generating an actuation signal (for example, such as an electric current, hydraulic pressure, and so forth).

Optionally, the processor of the display apparatus is configured to control at least one active optical characteristic of the at least one focusing lens by applying a control signal to the at least one focusing lens. Some examples of the at least one active optical characteristic include, but are not limited to, focal length and optical power. Furthermore, the control signal can be an electrical signal, hydraulic pressure, and so forth.

Optionally, the at least one focusing lens is a Liquid Crystal lens (LC lens). Optionally, the at least one focusing lens is positioned on an optical path between the at least one first optical element and the at least one context image renderer.

Optionally, the physical size (or dimensions) of the at least one context image renderer and the at least one focus image renderer may not limit operation of the display apparatus described hereinabove. Optionally, physically small sized context image renderer and focus image renderer may be used along with a lens (for example, such as an enlarging lens, a collimating lens, and so forth) in the optical paths of the projections of the rendered context and/or focus images, such that desired sizes, desired optical paths and/or desired optical depths of the projections of the context and focus images are achieved. As an example, a lens (for example, such as a convex lens) may be positioned on the optical path of the projection of the rendered focus image, between the at least one focus image renderer and the at least one first optical element. As another example, a collimating lens may be positioned on the optical path of the projection of the rendered focus image, between the focus image renderer and the at least one first optical element, to allow for collimating the projection of the rendered focus image.

The present disclosure also relates to the method as described above. Various embodiments and variants disclosed above apply mutatis mutandis to the method.

The method further comprises controlling the at least one first controllable lens of the display apparatus to adjust the optical distance of the rendered context image. The method further comprises controlling the at least one second controllable lens of the display apparatus to adjust the optical distance of the rendered focus image.

Optionally, in the method, the display apparatus further comprises the two prisms arranged in proximity to each other and the at least one actuator associated with the two prisms, wherein the method further comprises controlling the at least one actuator to adjust the distance between the two prisms, so as to switch between the at least two different optical distances. Futher optionally, in the method, the at least one context image renderer and/or the at least one focus image renderer are implemented by way of the at least one display, the at least one display comprising at least the first set of pixels and the second set of pixels, wherein the method further comprises controlling the at least one display to provide the first optical distance via the first set of pixels and the second optical distance via the second set of pixels, the first optical distance being different from the second optical distance.

Furthermore, optionally, in the method, the at least one focus image renderer is implemented by way of the at least one display comprising the array of pixels, the display apparatus further comprising the at least one array of micro-lenses positioned in front of the array of pixels of the at least one display, wherein the method further comprises using the at least one array of micro-lenses to magnify the at least one region of the focus image rendered by their corresponding pixels of the array of pixels in a manner that the desired optical distance is provided for the at least one region of the focus image.

### DETAILED DESCRIPTION OF THE DRAWINGS

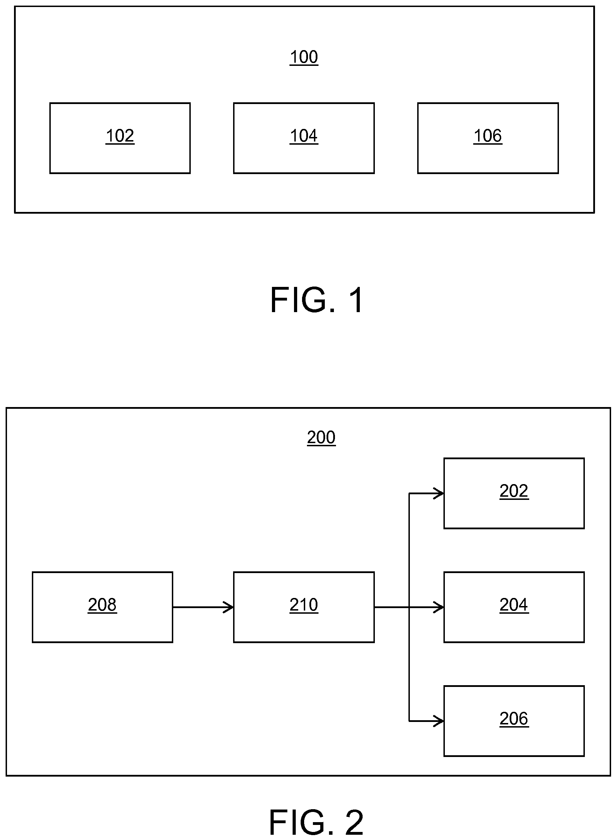

Referring to FIG. 1, illustrated is a block diagram of an architecture of a display apparatus **100**, in accordance with an embodiment of the present disclosure. The display apparatus **100** comprises at least one context image renderer (depicted as a context image renderer **102**) for rendering a context image, at least one focus image renderer (depicted as a focus image renderer **104**) for rendering a focus image, and at least one optical combiner (depicted as an optical combiner **106**) for combining the projection of the rendered context image with the projection of the rendered focus image to create a visual scene, wherein at least two different optical distances are provided in the visual scene.

Referring to FIG. 2, illustrated is a block diagram of an architecture of a display apparatus **200**, in accordance with another embodiment of the present disclosure. As shown, the display apparatus **200** includes at least one context image renderer (depicted as a context image renderer **202**) for rendering a context image, at least one focus image renderer (depicted as a focus image renderer **204**) for rendering a focus image, at least one optical combiner (depicted as an optical combiner **206**), means for detecting a gaze direction **208**, and a processor **210**. The processor **210** is coupled in communication with the at least one optical combiner **206** and the means for detecting the gaze direction **208**. Furthermore, as shown, the processor **210** is also coupled to the at least one context image renderer **202** and the at least one focus image renderer **204**.

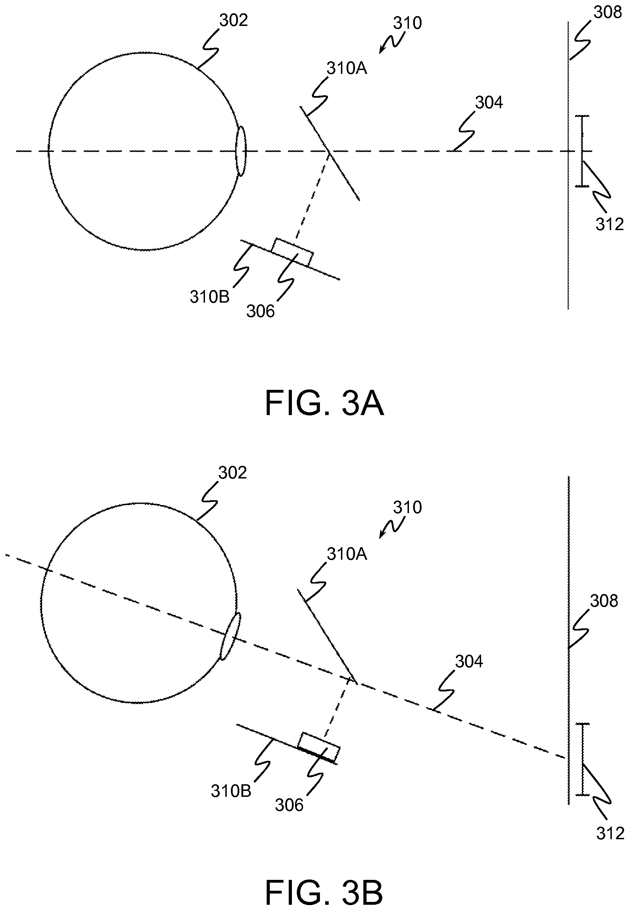

Referring to FIGs. 3A and 3B, illustrated is an exemplary operation of a display apparatus with respect to an eye **302** of a user, in accordance with an embodiment of the present disclosure. As shown, a gaze direction of the eye **302** is substantially towards a front side of the user, for example straight in front of the user. Furthermore, a line of sight **304** represents a gaze direction of the eye **302**.

In FIGs. 3A and 3B, there are also shown at least one focus image renderer, depicted as a focus display **306,** and at least one context image renderer, depicted as a context display **308.** Furthermore, the display apparatus is shown to include at least one optical combiner, depicted as an optical combiner **310.** Optionally, in this regard, the at least one optical combiner **310** includes at least one first optical element **310A** and at least one third actuator **310B.** In operation, the at least one context image renderer **308** projects a context image onto the eye **302,** while the at least one focus image renderer **306** projects a focus image onto the at least one first optical element **310A.** As shown, the at least one optical combiner **310** is arranged such that the projection of the context image is optically combined with the projection of the focus image in a manner that the projection of the rendered focus image substantially overlaps a projection of a region **312** of the context image that substantially corresponds to a region of visual accuracy of an input image. The region **312** is optionally masked while projecting the context image onto the eye **302** to avoid distortion between the projections of the focus and context images. Furthermore, the at least one third actuator **310B** is operable to adjust a location of the projection of the rendered focus image on the at least one first optical element **310A.** A processor of the display apparatus (not shown) is configured to control the at least one third actuator **310B** to move the at least one focus image renderer **306** with respect to the at least one first optical element **310A** of the at least one optical combiner **310.**

Next, FIG. 3B depicts a sideways shift in the gaze direction of the eye **302,** as compared to FIG. 3A. As shown, to compensate for the shift in the gaze direction, the at least one focus image renderer **306** is moved sideways with respect to the at least one first optical element **310A** by the at least one third actuator **310B** to continue projection of the focus image onto the fovea of the eye **302.** Therefore, the region **312** is also optionally moved on the at least one context image renderer **308,** so as to accommodate for such a shift in the gaze direction.

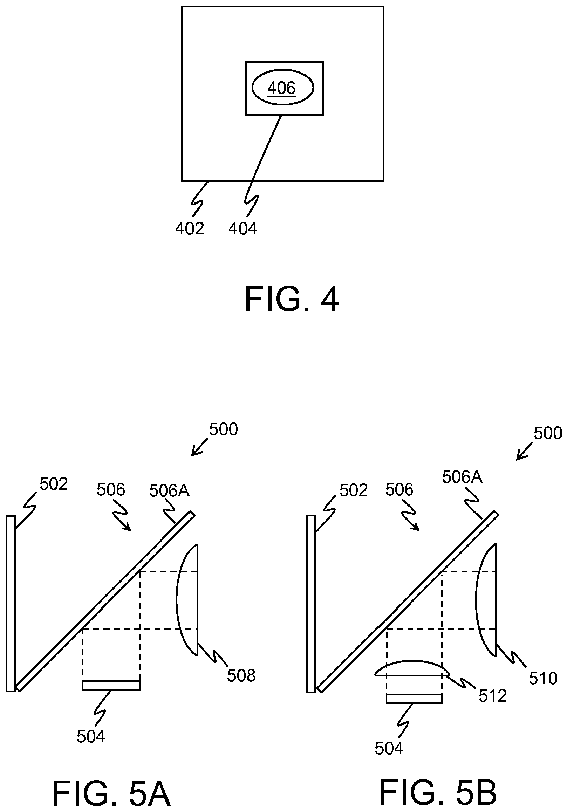

Referring to FIG. 4, illustrated is an exemplary representation of a context image **402** and a focus image **404** to be rendered and projected via a display apparatus, in accordance with an embodiment of the present disclosure. The context image **402** is rendered by at least one context image renderer whereas the focus image **404** is rendered by at least one focus image renderer. As shown, an angular dimension (namely, an angular width) of the context image **402** is larger as compared to an angular dimension of the focus image **404.** Furthermore, the focus image **404** substantially corresponds to a region of visual accuracy **406** whereat a gaze direction of a user of the display apparatus is focused.

It will be appreciated that the context image **402** and/or the focus image **404** are not limited to only rectangular shapes, and can have any suitable shape, for example, such as a substantially oval shape, a substantially round shape, a round-edged rectangle shape, and so on.

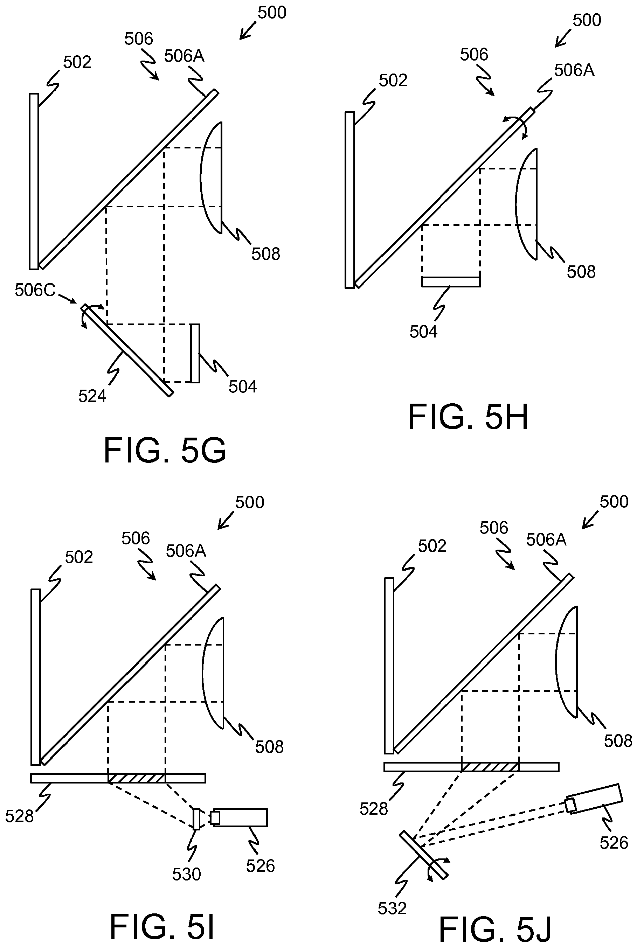

Referring to FIGs. 5A-5K, illustrated are exemplary implementations of a display apparatus **500,** in accordance with various embodiments of the present disclosure. It may be understood by a person skilled in the art that the FIGs 5A-5Kinclude simplified arrangements for implementation of the display apparatus **500** for sake of clarity, which should not unduly limit the scope of the claims herein. The person skilled in the art will recognize many variations, alternatives, and modifications of embodiments of the present disclosure.

Referring to FIG. 5A, illustrated is an exemplary implementation of the display apparatus **500,** in accordance with an embodiment of the present disclosure. The display apparatus **500** is shown to comprise at least one context image renderer implemented by way of a context display **502,** at least one focus image renderer implemented by way of a focus display **504,** and at least one optical combiner **506.** In operation, a processor (not shown) of the display apparatus **500** is configured to (i) render a context image at the at least one context image renderer **502,** and (ii) render a focus image at the at least focus image renderer **504.** The at least one optical combiner **506** is operable to combine a projection of the rendered context image with a projection of the rendered focus image to create a visual scene, as described earlier. Furthermore, a lens **508** is positioned on an optical path of the projections of the context and focus images.

With reference to FIGs. 5A-5K, the at least one optical combiner **506** optionally comprises a first optical element **506A** (depicted as a semi-transparent mirror).

Referring to FIG. 5B, the display apparatus **500** comprises at least one first controllable lens, depicted as a first controllable lens **510** for adjusting an optical distance of the rendered context image. As shown, the at least one first controllable lens **510** is positioned on an optical path of the projection of the rendered context image. Furthermore, the display apparatus **500** comprises at least one second controllable lens, depicted as a second controllable lens **512** for adjusting an optical distance of the rendered focus image. As shown, the at least one second controllable lens **512** is positioned on an optical path of the projection of the rendered focus image, for example, between the at least one focus image renderer **504** and the first optical element **506A.**

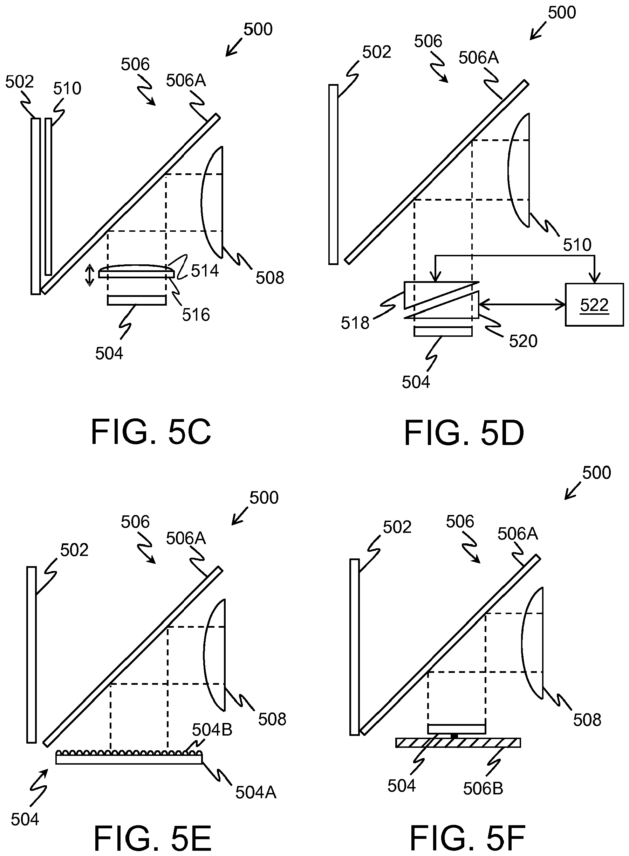

Referring to FIG. 5C, the display apparatus **500** optionally comprises at least one focusing lens (depicted as a focusing lens **514)** that is positioned on an optical path between the first optical element **506A** and the at least one focus image renderer **504,** and at least one sixth actuator **516** for moving the focusing lens **514** with respect to the at least one focus image renderer **504.** The processor of the display apparatus **500** is configured to control the at least one sixth actuator **516** to adjust a focus of the projection of the rendered focus image.

Moreover, optionally, the at least one first controllable lens **510** is positioned on the optical path between the at least one context image renderer **502** and the first optical element **506A.** In such an implementation, the at least one focus image renderer **504** need not be moved for adjusting the projection of the rendered focus image, since a lens subsystem formed by the focusing lens **514** and the at least one first controllable lens **510** can be used to adjust the optical path, optical distance, and/or focus of the projections of the rendered focus image and/or the context image.

Referring to FIG. 5D, the display apparatus **500** further comprises two prisms **518-520** arranged in proximity to each other and an actuator **522** for adjusting a distance between the two prisms **518-520.** As shown, the two prisms **518-520** are positioned on an optical path between the at least one focus image renderer **504** and the first optical element **506A.** The at least one actuator **522** moves the two prisms **518-520** with respect to the first optical combiner **106.**

Referring to FIG. 5E, the at least one focus image renderer **504** is implemented by way of at least one display **504A** comprising an array of pixels (not shown) and at least one array of micro-lenses **504B** positioned in front of the array of pixels of the at least one display **504A.**

Referring to FIG. 5F, the at least optical combiner **506** optionally comprises at least one third actuator **506B** for moving the at least one focus image renderer **504** with respect to the first optical element **506A,** so as to adjust a location of the projection of the rendered focus image on the first optical element **506A.**

Referring to FIG. 5G, the optical combiner **506** optionally comprises at least one second optical element (depicted as second optical element **506C),** wherein the at least one fourth actuator (not shown) is controllable to move the at least one second optical element **506C** with respect to the first optical element **506A.** Furthermore, the at least one second optical element **506C** is implemented by way of a mirror **524.**

Referring to FIG. 5H, at least one fifth actuator (not shown) is controllable to move the first optical element **506A.** As an example, the at least one fifth actuator rotates the first optical element **506A** about at least one axis.

Referring to FIGs. 51 and 5J, the at least one focus image renderer is optionally implemented by way of at least one projector (depicted as a projector **526)** and at least one projection screen (depicted as a projection screen **528).** In FIG. 51, optionally, a prism **530** is positioned in an optical path between the at least one projector **526** and the at least one projection screen **528.** In FIG. 5J, optionally, a rotatable mirror **532** is positioned in an optical path between the projector **526** and the projection screen **528.**

It will be appreciated that the prism **530** and the rotatable mirror **532** of FIGs. 51 and 5J, respectively, allow for adjusting the location of the projection of the focus image on the at least one projection screen **528.**

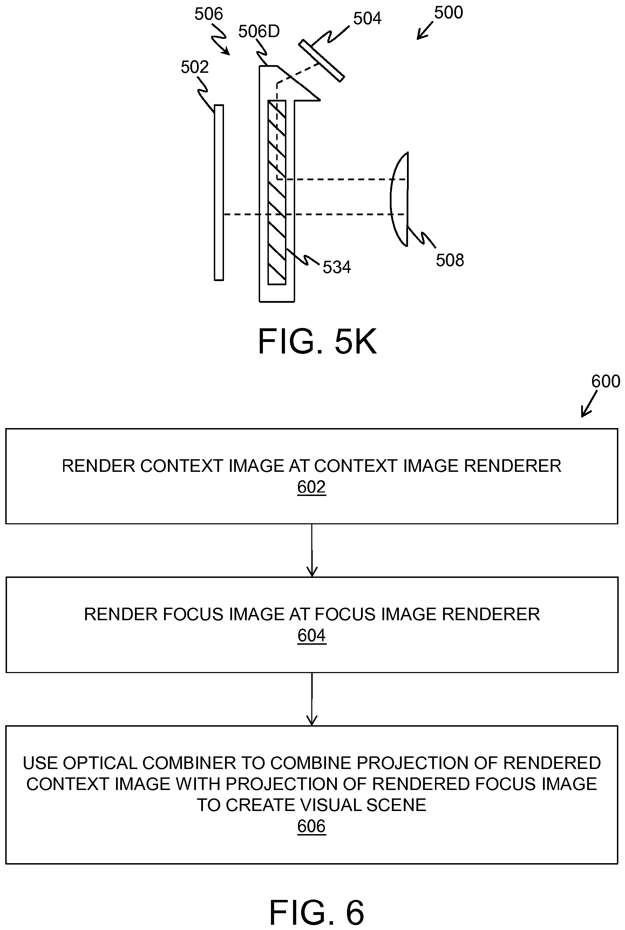

Referring to FIG. 5K, the at least one first optical element is implemented by way of an optical waveguide **506D.** Furthermore, as shown, the optical waveguide **506D** comprises optical components **534,** for example, such as microprisms, mirrors, diffractive optics, and so forth.

Referring to FIG. 6, illustrated are steps of a method **600** of displaying via the display apparatus, in accordance with an embodiment of the present disclosure. At step **602,** a context image is rendered at, at least one context image renderer, wherein an angular width of a projection of the rendered context image ranges from 40 degrees to 220 degrees. At step **604,** a focus image is rendered at, at least one focus image renderer, wherein an angular width of a projection of the rendered focus image ranges from 5 degrees to 60 degrees. At step **606,** at least one optical combiner is used to combine the projection of the rendered context image with the projection of the rendered focus image to create a visual scene, wherein the visual scene is created in a manner that at least two different optical distances are provided therein.

The steps **602** to **606** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A display apparatus (100; 200; 500) comprising:
- at least one context image renderer (502) for rendering a context image,
wherein an angular width of a projection of the rendered context image ranges from 40 degrees to 220 degrees;
- at least one focus image renderer (504) for rendering a focus image,
wherein an angular width of a projection of the rendered focus image ranges from 5 degrees to 60 degrees;
- at least one optical combiner (506) for combining the projection of the
rendered context image with the projection of the rendered focus image to create a visual scene,
wherein the visual scene is to be created in a manner that at least two different optical distances are provided therein,
- at least one first controllable lens (510) for adjusting an optical distance of the rendered context image;
- at least one second controllable lens (512) for adjusting an optical distance of the rendered focus image;
- means (208) for detecting a gaze direction; and
- a processor (210) coupled in communication with the at least one optical combiner and the means for detecting the gaze direction, wherein the processor is configured to:
(a) receive an input image, and use the detected gaze direction to determine a region of visual accuracy of the input image;
(b) process the input image to generate the context image and the focus image, the context image having a first resolution and the focus image having a second resolution, wherein:
(i) the focus image substantially corresponds to the region of visual accuracy of the input image, and
(ii) the second resolution is higher than the first resolution; and
(c) render the context image at the at least one context image renderer and the focus image at the at least one focus image renderer substantially simultaneously, whilst controlling the at least one optical combiner to combine the projection of the rendered context image with the projection of the rendered focus image in a manner that the projection of the rendered focus image substantially overlaps a projection of a region of the rendered context image that substantially corresponds to the region of visual accuracy of the input image.

2. The display apparatus of claim 1, wherein a focal length of the at least one first controllable lens is to be adjusted at a rate that is substantially similar to a refresh rate of the at least one context image renderer.

3. The display apparatus of claim 1, wherein a focal length of the at least one second controllable lens is to be adjusted at a rate that is substantially similar to a refresh rate of the at least one focus image renderer.

4. The display apparatus of any of claims 1 to 3, further comprising two prisms arranged in proximity to each other and at least one actuator for adjusting a distance between the two prisms, wherein the distance between the two prisms is to be adjusted to switch between the at least two different optical distances.

5. The display apparatus of any of claims 1 to 4, wherein the at least one context image renderer and/or the at least one focus image renderer are implemented by way of at least one display, the at least one display comprising at least a first set of pixels and a second set of pixels, wherein a first optical distance provided by the first set of pixels is different from a second optical distance provided by the second set of pixels.

6. The display apparatus of any of claims 1 to 5, wherein the at least one focus image renderer is implemented by way of at least one display comprising an array of pixels, and wherein the display apparatus further comprises at least one array of micro-lenses positioned in front of the array of pixels of the at least one display, the at least one array of micro-lenses being arranged to magnify at least one region of the focus image rendered by their corresponding pixels of the array of pixels in a manner that a desired optical distance is provided for the at least one region of the focus image.

7. A method of displaying, via a display apparatus (100; 200; 500) comprising at least one context image renderer (502), at least one focus image renderer (504) and at least one optical combiner (506), the method comprising:
(i) rendering a context image at the at least one context image renderer, wherein an angular width of a projection of the rendered context image ranges from 40 degrees to 220 degrees;
(ii) rendering a focus image at the at least one focus image renderer, wherein an angular width of a projection of the rendered focus image ranges from 5 degrees to 60 degrees;
(iii) using the at least one optical combiner to combine the projection of the rendered context image with the projection of the rendered focus image to create a visual scene,
wherein the visual scene is created in a manner that at least two different optical distances are provided therein
- detecting a gaze direction; and
- comprising in communication with the at least one optical combiner and the means for detecting the gaze direction, the following steps:
(a) receiving an input image, and using the detected gaze direction to determine a region of visual accuracy of the input image;
(b) processing the input image to generate the context image and the focus image, the context image having a first resolution and the focus image having a second resolution, wherein:
(i) the focus image substantially corresponds to the region of visual accuracy of the input image, and
(ii) the second resolution is higher than the first resolution;
(iii) controlling at least one first controllable lens (510) of the display apparatus to adjust an optical distance of the rendered context image;
(iv) controlling at least one second controllable lens (512) of the display apparatus to adjust an optical distance of the rendered focus image; and
(c) rendering the context image at the at least one context image renderer and the focus image at the at least one focus image renderer substantially simultaneously, whilst controlling the at least one optical combiner to combine the projection of the rendered context image with the projection of the rendered focus image in a manner that the projection of the rendered focus image substantially overlaps a projection of a region of the rendered context image that substantially corresponds to the region of visual accuracy of the input image.

8. The method of claim 7, wherein the display apparatus further comprises two prisms arranged in proximity to each other and at least one actuator associated with the two prisms, wherein the method further comprises controlling the at least one actuator to adjust a distance between the two prisms, so as to switch between the at least two different optical distances.

9. The method of any of claims 7 to 8, wherein the at least one context image renderer and/or the at least one focus image renderer are implemented by way of at least one display, the at least one display comprising at least a first set of pixels and a second set of pixels, wherein the method further comprises controlling the at least one display to provide a first optical distance via the first set of pixels and a second optical distance via the second set of pixels, the first optical distance being different from the second optical distance.

10. The method of any of claims 7 to 9, wherein the at least one focus image renderer is implemented by way of at least one display comprising an array of pixels, the display apparatus further comprising at least one array of micro-lenses positioned in front of the array of pixels of the at least one display, wherein the method further comprises using the at least one array of micro-lenses to magnify at least one region of the focus image rendered by their corresponding pixels of the array of pixels in a manner that a desired optical distance is provided for the at least one region of the focus image.

## Patentansprüche

1. Anzeigevorrichtung (100; 200; 500), umfassend:
- mindestens einen Kontextbild-Renderer (502) zum Rendern eines Kontextbildes,
wobei eine Winkelbreite einer Projektion des gerenderten Kontextbildes im Bereich von 40 Grad bis 220 Grad liegt;
- mindestens einen Fokusbild-Renderer (504) zum Rendern eines Fokusbildes,
wobei eine Winkelbreite einer Projektion des gerenderten Fokusbildes im Bereich von 5 Grad bis 60 Grad liegt;
- mindestens einen optischen Kombinator (506) zum Kombinieren der Projektion des gerenderten Kontextbildes mit der Projektion des gerenderten Fokusbildes, um eine visuelle Szene zu erzeugen,
wobei die visuelle Szene auf eine Weise erzeugt werden soll, dass mindestens zwei unterschiedliche optische Abstände darin bereitgestellt werden,
- mindestens eine erste steuerbare Linse (510) zum Einstellen eines optischen Abstands des gerenderten Kontextbildes;
- mindestens eine zweite steuerbare Linse (512) zum Einstellen eines optischen Abstands des gerenderten Fokusbildes;
- Mittel (208) zum Erkennen einer Blickrichtung; und
- einen Prozessor (210), der in Kommunikation mit dem mindestens einen optischen Kombinator und dem Mittel zum Erkennen der Blickrichtung gekoppelt ist, wobei der Prozessor konfiguriert ist zum:
(a) Empfangen eines Eingangsbildes und Verwenden der erkannten Blickrichtung zum Bestimmen eines Bereichs von visueller Genauigkeit des Eingangsbildes;
(b) Verarbeiten des Eingangsbildes, um das Kontextbild und das Fokusbild zu erzeugen, wobei das Kontextbild eine erste Auflösung und das Fokusbild eine zweite Auflösung aufweist, wobei:
(i) das Fokusbild im Wesentlichen dem Bereich von visueller Genauigkeit des Eingangsbildes entspricht, und
(ii) die zweite Auflösung höher als die erste Auflösung ist; und
(c) Rendern des Kontextbildes an dem mindestens einen Kontextbild-Renderer und des Fokusbildes an dem mindestens einen Fokusbild-Renderer im Wesentlichen gleichzeitig, während der mindestens eine optische Kombinator so gesteuert wird, dass die Projektion des gerenderten Kontextbildes mit der Projektion des gerenderten Fokusbildes so kombiniert wird, dass die Projektion des gerenderten Fokusbildes eine Projektion eines Bereichs des gerenderten Kontextbildes, der im Wesentlichen dem Bereich von visueller Genauigkeit entspricht, im Wesentlichen überlappt.

2. Anzeigevorrichtung nach Anspruch 1, wobei eine Brennweite der mindestens einen ersten steuerbaren Linse auf eine Rate eingestellt werden soll, die im Wesentlichen einer Aktualisierungsrate des mindestens einen Kontextbild-Kombinators ähnlich ist.

3. Anzeigevorrichtung nach Anspruch 1, wobei eine Brennweite der mindestens einen zweiten steuerbaren Linse bei einer Rate eingestellt werden soll, die im Wesentlichen einer Aktualisierungsrate des mindestens einen Fokusbild-Renderers ähnlich ist.

4. Anzeigevorrichtung nach einem der Ansprüche 1 bis 3, ferner umfassend zwei in der Nähe zueinander angeordnete Prismen und mindestens einen Aktuator zum Einstellen eines Abstands zwischen den beiden Prismen, wobei der Abstand zwischen den beiden Prismen eingestellt werden soll, um zwischen den mindestens zwei unterschiedlichen optischen Abständen umzuschalten.

5. Anzeigevorrichtung nach einem der Ansprüche 1 bis 4, wobei der mindestens eine Kontextbild-Renderer und/oder der mindestens eine Fokusbild-Renderer durch mindestens eine Anzeige implementiert sind, wobei die mindestens eine Anzeige mindestens einen ersten Satz von Pixeln und einen zweiten Satz von Pixeln umfasst, wobei ein erster optischer Abstand, der von dem ersten Satz von Pixeln bereitgestellt wird, von einem zweiten optischen Abstand, der von dem zweiten Satz von Pixeln bereitgestellt wird, verschieden ist.

6. Anzeigevorrichtung nach einem der Ansprüche 1 bis 5, wobei der mindestens eine Fokusbild-Renderer durch mindestens eine Anzeige implementiert ist, die eine Anordnung von Pixeln umfasst, und wobei die Anzeigevorrichtung ferner mindestens eine Anordnung von Mikrolinsen umfasst, die vor der Anordnung von Pixeln der mindestens einen Anzeige positioniert sind, wobei die mindestens eine Anordnung von Mikrolinsen angeordnet ist, um mindestens einen Bereich des Fokusbildes zu vergrößern, der durch ihre entsprechenden Pixel der Pixelmatrix in einer Weise gerendert wird, dass ein gewünschter optischer Abstand für den mindestens einen Bereich des Fokusbildes bereitgestellt wird.

7. Verfahren zum Anzeigen, über eine Anzeigevorrichtung (100; 200; 500), umfassend mindestens einen Kontextbild-Renderer (502), mindestens einen Fokusbild-Renderer (504) und mindestens einen optischen Kombinator (506), wobei das Verfahren umfasst:
(i) Rendern eines Kontextbildes an dem mindestens einen Kontextbild-Renderer, wobei eine Winkelbreite einer Projektion des gerenderten Kontextbildes im Bereich von 40 Grad bis 220 Grad liegt;
(ii) Rendern eines Fokusbildes an dem mindestens einen Fokusbild-Renderer, wobei eine Winkelbreite einer Projektion des gerenderten Fokusbildes im Bereich von 5 Grad bis 60 Grad liegt;
(iii) Verwenden des mindestens einen optischen Kombinators, um die Projektion des gerenderten Kontextbildes mit der Projektion des gerenderten Fokusbildes zu kombinieren, um eine visuelle Szene zu erzeugen,
wobei die visuelle Szene auf eine Weise erzeugt wird, dass mindestens zwei unterschiedliche optische Abstände darin bereitgestellt werden,
- Erkennen einer Blickrichtung; und
- umfassend in Kommunikation mit dem mindestens einen optischen Kombinator und dem Mittel zum Erkennen der Blickrichtung, die folgenden Schritte:
(a) Empfangen eines Eingangsbildes und Verwenden der erkannten Blickrichtung zum Bestimmen eines Bereichs von visueller Genauigkeit des Eingangsbildes;
(b) Verarbeiten des Eingangsbildes, um das Kontextbild und das Fokusbild zu erzeugen, wobei das Kontextbild eine erste Auflösung und das Fokusbild eine zweite Auflösung aufweist, wobei:
(i) das Fokusbild im Wesentlichen dem Bereich von visueller Genauigkeit des Eingangsbildes entspricht, und
(ii) die zweite Auflösung höher als die erste Auflösung ist;
(iii) Steuern mindestens einer ersten steuerbaren Linse (510) der Anzeigevorrichtung, um einen optischen Abstand des gerenderten Kontextbildes einzustellen;
(iv) Steuern mindestens einer zweiten steuerbaren Linse (512) der Anzeigevorrichtung, um einen optischen Abstand des gerenderten Fokusbildes einzustellen; und
(c) Rendern des Kontextbildes an dem mindestens einen Kontextbild-Renderer und des Fokusbildes an dem mindestens einen Fokusbild-Renderer im Wesentlichen gleichzeitig, während der mindestens eine optische Kombinator so gesteuert wird, dass die Projektion des gerenderten Kontextbildes mit der Projektion des gerenderten Fokusbildes so kombiniert wird, dass die Projektion des gerenderten Fokusbildes eine Projektion eines Bereichs des gerenderten Kontextbildes, der im Wesentlichen dem Bereich von visueller Genauigkeit entspricht, im Wesentlichen überlappt.

8. Verfahren nach Anspruch 7, wobei die Anzeigevorrichtung ferner zwei Prismen umfasst, die in der Nähe zueinander angeordnet sind, und mindestens einen Aktuator, der den zwei Prismen zugeordnet ist, wobei das Verfahren ferner das Steuern des mindestens einen Aktuators umfasst, um einen Abstand zwischen den zwei Prismen einzustellen, um zwischen den mindestens zwei unterschiedlichen optischen Abständen umzuschalten.

9. Verfahren nach einem der Ansprüche 7 bis 8, wobei der mindestens eine Kontextbild-Renderer und/oder der mindestens eine Fokusbild-Renderer durch mindestens eine Anzeige implementiert sind, wobei die mindestens eine Anzeige mindestens einen ersten Satz von Pixeln und einen zweiten Satz von Pixeln umfasst, wobei das Verfahren ferner das Steuern der mindestens einen Anzeige umfasst, um einen ersten optischen Abstand über den ersten Satz von Pixeln und einen zweiten optischen Abstand über den zweiten Satz von Pixeln bereitzustellen, wobei der erste optische Abstand von dem zweiten optischen Abstand verschieden ist.

10. Verfahren nach einem der Ansprüche 7 bis 9, wobei der mindestens eine Fokusbild-Renderer durch mindestens eine Anzeige implementiert wird, die eine Pixelmatrix umfasst, wobei die Anzeigevorrichtung ferner mindestens eine Anordnung von Mikrolinsen umfasst, die vor der Anordnung von Pixeln der mindestens einen Anzeige positioniert sind, wobei das Verfahren ferner das Verwenden der mindestens einen Anordnung von Mikrolinsen umfasst, um mindestens einen Bereich des Fokusbildes zu vergrößern, der durch ihre entsprechenden Pixel der Pixelmatrix in einer Weise gerendert wird, dass ein gewünschter optischer Abstand für den mindestens einen Bereich des Fokusbildes bereitgestellt wird.

## Revendications

1. Appareil d'affichage (100 ; 200 ; 500) comprenant :
- au moins un dispositif de restitution d'image de contexte (502) pour restituer une image de contexte,
dans lequel une largeur angulaire d'une projection de l'image de contexte restituée va de 40 degrés à 220 degrés ;
- au moins un dispositif de restitution d'image de focalisation (504) pour restituer une image de focalisation,
dans lequel une largeur angulaire d'une projection de l'image de focalisation restituée va de 5 degrés à 60 degrés ;
- au moins un combinateur optique (506) pour combiner la projection de l'image de contexte restituée avec la projection de l'image de focalisation restituée pour créer une scène visuelle,
dans lequel la scène visuelle doit être créée d'une manière telle qu'au moins deux distances optiques différentes sont fournies en son sein,
- au moins une première lentille commandable (510) pour ajuster une distance optique de l'image de contexte restituée ;
- au moins une deuxième lentille commandable (512) pour ajuster une distance optique de l'image de focalisation restituée ;
- un moyen (208) pour détecter une direction de regard ; et
- un processeur (210) couplé en communication avec l'au moins un combinateur optique et le moyen pour détecter la direction de regard, dans lequel le processeur est configuré pour :
(a) recevoir une image d'entrée, et utiliser la direction de regard détectée pour déterminer une région de précision visuelle de l'image d'entrée ;
(b) traiter l'image d'entrée pour générer l'image de contexte et l'image de focalisation, l'image de contexte ayant une première résolution et l'image de focalisation ayant une deuxième résolution, dans lequel :
(i) l'image de focalisation correspond sensiblement à la région de précision visuelle de l'image d'entrée, et
(ii) la deuxième résolution est supérieure à la première résolution ; et
(c) restituer l'image de contexte au niveau de l'au moins un dispositif de restitution d'image de contexte et l'image de focalisation au niveau de l'au moins un dispositif de restitution d'image de focalisation sensiblement en même temps, tout en commandant l'au moins un combinateur optique pour combiner la projection de l'image de contexte restituée avec la projection de l'image de focalisation restituée d'une manière telle que la projection de l'image de focalisation restituée chevauche sensiblement une projection d'une région de l'image de contexte restituée qui correspond sensiblement à la région de précision visuelle de l'image d'entrée.

2. Appareil d'affichage selon la revendication 1, dans lequel une longueur focale de l'au moins une première lentille commandable doit être ajustée à un taux qui est sensiblement similaire à un taux de rafraîchissement de l'au moins un dispositif de restitution d'image de contexte.

3. Appareil d'affichage selon la revendication 1, dans lequel une longueur focale de l'au moins une deuxième lentille commandable doit être ajustée à un taux qui est sensiblement similaire à un taux de rafraîchissement de l'au moins un dispositif de restitution d'image de focalisation.

4. Appareil d'affichage selon l'une quelconque des revendications 1 à 3, comprenant en outre deux prismes agencés à proximité l'un de l'autre et au moins un actionneur pour ajuster une distance entre les deux prismes, dans lequel la distance entre les deux prismes doit être ajustée pour commuter entre les au moins deux distances optiques différentes.

5. Appareil d'affichage selon l'une quelconque des revendications 1 à 4, dans lequel l'au moins un dispositif de restitution d'image de contexte et/ou l'au moins un dispositif de restitution d'image de focalisation sont implémentés au moyen d'au moins un affichage, l'au moins un affichage comprenant au moins un premier ensemble de pixels et un deuxième ensemble de pixels, dans lequel une première distance optique fournie par le premier ensemble de pixels est différente d'une deuxième distance optique fournie par le deuxième ensemble de pixels.

6. Appareil d'affichage selon l'une quelconque des revendications 1 à 5, dans lequel l'au moins un dispositif de restitution d'image de focalisation est implémenté au moyen d'au moins un affichage comprenant une matrice de pixels, et dans lequel l'appareil d'affichage comprend en outre au moins une matrice de micro-lentilles positionnée devant la matrice de pixels de l'au moins un affichage, l'au moins une matrice de micro-lentilles étant agencée pour agrandir au moins une région de l'image de focalisation restituée par ses pixels correspondants de la matrice de pixels d'une manière telle qu'une distance optique souhaitée est fournie pour ladite au moins une région de l'image de focalisation.

7. Procédé d'affichage, par l'intermédiaire d'un appareil d'affichage (100 ; 200 ; 500) comprenant au moins un dispositif de restitution d'image de contexte (502), au moins un dispositif de restitution d'image de focalisation (504) et au moins un combinateur optique (506), le procédé comprenant :
(i) la restitution d'une image de contexte au niveau de l'au moins un dispositif de restitution d'image de contexte, dans lequel une largeur angulaire d'une projection de l'image de contexte restituée va de 40 degrés à 220 degrés ;
(ii) la restitution d'une image de focalisation au niveau de l'au moins un dispositif de restitution d'image de focalisation, dans lequel une largeur angulaire d'une projection de l'image de focalisation restituée va de 5 degrés à 60 degrés ;
(iii) l'utilisation de l'au moins un combinateur optique pour combiner la projection de l'image de contexte restituée avec la projection de l'image de focalisation restituée pour créer une scène visuelle,
dans lequel la scène visuelle est créée d'une manière telle qu'au moins deux distances optiques différentes sont fournies en son sein
- la détection d'une direction de regard ; et
- comprenant en communication avec l'au moins un combinateur optique et le moyen pour détecter la direction de regard, les étapes suivantes :
(a) réception d'une image d'entrée, et utilisation de la direction de regard détectée pour déterminer une région de précision visuelle de l'image d'entrée ;
(b) traitement de l'image d'entrée pour générer l'image de contexte et l'image de focalisation, l'image de contexte ayant une première résolution et l'image de focalisation ayant une deuxième résolution, dans lequel :
(i) l'image de focalisation correspond sensiblement à la région de précision visuelle de l'image d'entrée, et
(ii) la deuxième résolution est supérieure à la première résolution ;
(iii) on commande au moins une première lentille commandable (510) de l'appareil d'affichage pour ajuster une distance optique de l'image de contexte restituée ;
(iv) on commande au moins une deuxième lentille commandable (512) de l'appareil d'affichage pour ajuster une distance optique de l'image de focalisation restituée ; et
(c) restitution de l'image de contexte au niveau de l'au moins un dispositif de restitution d'image de contexte et de l'image de focalisation au niveau de l'au moins un dispositif de restitution d'image de focalisation sensiblement en même temps, tout en commandant l'au moins un combinateur optique pour combiner la projection de l'image de contexte restituée avec la projection de l'image de focalisation restituée d'une manière telle que la projection de l'image de focalisation restituée chevauche sensiblement une projection d'une région de l'image de contexte restituée qui correspond sensiblement à la région de précision visuelle de l'image d'entrée.

8. Procédé selon la revendication 7, dans lequel l'appareil d'affichage comprend en outre deux prismes agencés à proximité l'un de l'autre et au moins un actionneur associé aux deux prismes, dans lequel le procédé comprend en outre la commande de l'au moins un actionneur pour ajuster une distance entre les deux prismes, de façon à commuter entre les au moins deux distances optiques différentes.

9. Procédé selon l'une quelconque des revendications 7 à 8, dans lequel l'au moins un dispositif de restitution d'image de contexte et/ou l'au moins un dispositif de restitution d'image de focalisation sont implémentés au moyen d'au moins un affichage, l'au moins un affichage comprenant au moins un premier ensemble de pixels et un deuxième ensemble de pixels, dans lequel le procédé comprend en outre la commande de l'au moins un affichage pour fournir une première distance optique par l'intermédiaire du premier ensemble de pixels et une deuxième distance optique par l'intermédiaire du deuxième ensemble de pixels, la première distance optique étant différente de la deuxième distance optique.

10. Procédé selon l'une quelconque des revendications 7 à 9, dans lequel l'au moins un dispositif de restitution d'image de focalisation est implémenté au moyen d'au moins un affichage comprenant une matrice de pixels, l'appareil d'affichage comprenant en outre au moins une matrice de micro-lentilles positionnée devant la matrice de pixels de l'au moins un affichage, dans lequel le procédé comprend en outre l'utilisation de l'au moins une matrice de micro-lentilles pour agrandir au moins une région de l'image de focalisation restituée par ses pixels correspondants de la matrice de pixels d'une manière telle qu'une distance optique souhaitée est fournie pour ladite au moins une région de l'image de focalisation.
